(19) Europäisches Patentamt
European Patent Office
Office européen des brevets

(11) EP 4 119 500 A1

(12) EUROPEAN PATENT APPLICATION

(43) Date of publication:
**18.01.2023 Bulletin 2023/03**

(21) Application number: **21185544.0**

(22) Date of filing: **14.07.2021**

(51) International Patent Classification (IPC):
***C01B 33/32*** (2006.01) ***B65D 81/38*** (2006.01)
***E04B 1/76*** (2006.01) ***C04B 28/26*** (2006.01)

(52) Cooperative Patent Classification (CPC):
**C01B 33/325; C04B 28/26**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Qwarzo S.p.A.**
**25038 Rovato (IT)**

(72) Inventor: **PANZERI, Luca**
**23871 Lomagna (IT)**

(74) Representative: **Palladino, Saverio Massimo et al**
**Notarbartolo & Gervasi S.p.A.**
**Viale Achille Papa, 30**
**20149 Milano (IT)**

(54) **PROCESS FOR MANUFACTURING AN ARTICLE CONSISTING OF SILICEOUS MATERIAL, HAVING LOW DENSITY AND THERMAL CONDUCTIVITY, AND A MANUFACTURED ARTICLE THUS OBTAINED**

(57) A process is described for manufacturing an article formed by a siliceous material, which has low density and thermal conductivity values and is suitable for manufacturing containers, in particular for replacing polystyrene foam containers. The invention also relates to the manufactured articles obtained by the process.

EP 4 119 500 A1

## Description

### FIELD OF THE INVENTION

The present invention relates to a process for manufacturing an article formed by a siliceous material, which has low density and thermal conductivity values and is suitable for manufacturing articles to replace similar products made of expanded polystyrene. The invention also relates to the manufactured articles obtained by the process.

### STATE OF THE ART

Polystyrene, or polystyrene foam, is a material that is widely used in many sectors due to its light weight and low thermal conductivity.

Polystyrene is a particularly economical material, as the expansion process only requires water vapour; the air inside the polystyrene as a result of the expansion process gives it its high thermal insulation characteristics, without reducing its mechanical properties.

This material has numerous applications: further to being used for various types of packaging, it is widely used in the sea and in commercial and tourist ports, aquaculture, fishing and marine activities, for example for making buoys, floats and jetties.

One area in which the material is widely used, again related to marine activities, is in the manufacture of crates for the storage, transport and display of fish in markets, which are typically made of polystyrene because this material allows long-term preservation of the ice on which the fish product is placed.

Fish crates are widely used in Europe, and very often they are not collected and recycled, and indeed very often they are thrown directly into the sea when they are too dirty or broken. In Italy alone, it is estimated that 10 million disposable polystyrene crates are consumed every year.

A major drawback of polystyrene is that it never fully biodegrades and can pose a serious threat to marine life and, consequently, to human health: in water, polystyrene tends to crumble, forming microplastics (plastic particles typically ranging in size from 0.1 micrometres to 5 millimetres) that are mistaken for food by marine fauna, and thus enter the food chain all the way to humans.

It has been estimated that more than one million microplastics can be produced from a single fish crate once it is dispersed in the sea and begins its degradation process.

Another application in which large quantities of polystyrene foam are used is for thermal insulation panels in buildings. Again, the panels complicate disposal operations during building demolition or renovation work because the polystyrene has to be separated from other rubble and landfilled separately to prevent its dispersion into the environment. In addition, another problem with the use of polystyrene in the building industry is that this material is not fire resistant, whereas new regulations in the field require flame resistance instead.

In view of the recognised level of pollution from polystyrene, the first measures have already been taken regarding its use, and containers and cups made from this material have been banned.

It is an object of the present invention to make available a process for producing a product which has similar lightness and thermal insulation characteristics to polystyrene and which can therefore be used as a substitute thereof, but which does not present the pollution problems of polystyrene. Another object of the invention is to make available a manufactured article obtained by said process.

### SUMMARY OF THE INVENTION

These objects are achieved according to the present invention, which in a first aspect thereof relates to a process for obtaining an article formed by expanded sodium silicate spherules, comprising the following steps:

a) preparing a mixture comprising 15 to 70% by weight of a first component consisting of an acidic aqueous solution having a pH value between 1.0 and 2.6, and 30 to 85% by weight of a second component selected from an alkyl-trialkoxysilane and a mixture of an alkyl-trialkoxysilane and a tetraalkoxysilane;
b) allowing the mixture to react for at least 8 hours at a temperature between 18 and 35 °C, obtaining a sol;
c) dripping into the sol, maintained under gentle stirring, a solution of sodium silicate having formula $(SiO_2)_x \cdot (Na_2O)_y$ wherein the ratio x/y may vary between 1.65 and 3.9, obtaining sodium silicate spherules at the bottom of the sol container;
d) removing the sol by filtration, recovering the sodium silicate spherules having the surface covered with a thin layer of sol;
e) transferring the sodium silicate spherules with a thin layer of sol on their surface into a closed mould having the shape of the desired final article and bringing them into the mould at a temperature between 180 and 320 °C.

In a second aspect, the invention relates to a manufactured article obtained by the process described above.

### BRIEF DESCRIPTION OF THE DRAWINGS

Fig. 1 schematically shows a plant for carrying out the process of the invention.

## DETAILED DESCRIPTION OF THE INVENTION

In the description below, all percentages are by weight unless otherwise indicated.

In the first step of the invention, a), a mixture is prepared comprising a first component consisting of an acidic aqueous solution and a second component selected from an alkyl-trialkoxysilane and a mixture between an alkyl-trialkoxysilane and a tetraalkoxysilane, in the ratios indicated above.

The aqueous solution with pH between 1.0 and 2.6 (first component) is prepared by addition to distilled water of an acid selected from hydrochloric acid and nitric acid; preferably, these acids are added to the water in the form of their concentrated solutions. The pH can be checked in real time using a pH meter during the addition of the acid to the water. Alternatively, calibrated additions can be made to the water of solutions of these acids at known concentrations following preliminary tests; for example, the inventors have verified that pH values in the desired range can be obtained by adding solutions of these acids at a concentration of 1 N to distilled water at volume ratios of between 10:1 and 350:1 between the water and the acid solution. Preferably, the pH of the solution (first component) is maintained at values between 1.5 and 2.3, which can be obtained by adding acid solutions of HCl or $HNO_3$ at a concentration of 1 N to distilled water in volume ratios of 30:1 to 180:1 between the water and the acid solution.

The second component used in step a) is selected from an alkyl-trialkoxysilane and a mixture of an alkyl-trialkoxysilane and a tetraalkoxysilane.

Alkyl-trialkoxysilanes are compounds of general formula (I):

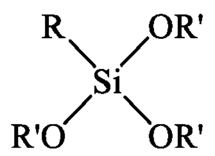

(I)

wherein R and R', equal or different from each other, are C1-C4 alkyl radicals.

The most common alkyl-trialkoxysilane, and preferred for the purposes of the present invention, is methyl-triethoxysilane (R = methyl, R' = ethyl), known in the industry by the abbreviation MTES.

Tetraalkoxysilanes are compounds of general formula (II):

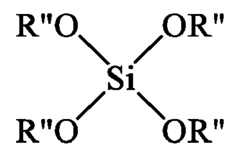

(II)

wherein the R" groups are C1-C4 alkyl radicals.

The most common tetraalkoxysilanes are tetramethoxysilane (R" = methyl), generally referred to by the abbreviation TMOS, tetraisopropoxysilane (R" = isopropyl) and, most importantly, tetraethoxysilane (R" = ethyl), commonly referred to by the abbreviation TEOS, which is preferred for the purposes of the present invention (when a tetraalkoxysilane is present in the second component).

As mentioned above, the alkyl trialkoxysilane may constitute by itself the second component of the mixture of step a), in which case its amount may vary between 30 and 85% by weight of said mixture. If a mixture of an alkyl-trialkoxysilane and a tetraalkoxysilane is used as the second component, their weight ratio may vary between 17:1 and 1:17. Alkyl-trialkoxysilanes and tetraalkoxysilanes are widely commercially available compounds; the two preferred compounds for the purposes of the present invention are sold for example by Evonik Resource Efficiency GmbH, Essen (Germany) under the name Dynasylan® A (TEOS) and Dynasylan® MTES (MTES) or by the company Wacker Chemie Italia (Segrate, MI) under the name WACKER® SILICATE TES 28 (TEOS) and WACKER® SILANE MI-TRIETHOXY (MTES).

The two components (acidic aqueous solution and silane(s)) are introduced in the desired ratios into a container and in step b) of the process the mixture is allowed to react for at least 8 hours, preferably at least 12 hours, at room temperature. At this stage, hydrolysis of the silanes takes place, with the formation of a sol comprising water, hydrolysed silane compounds and the alcohol (or mixture of alcohols) corresponding to the R, R' and possibly R" radicals of the starting silanes.

The sol can be kept in the container in which it was formed if this is suitable for carrying out steps c) and d) of the process, or transferred to a suitable reactor.

In step c), an aqueous solution of sodium silicate of formula $(SiO_2)_x{\cdot}(Na_2O)_y$ in which the x/y ratio can vary between 1.65 and 3.9 is dripped into the sol. Aqueous sodium silicate solutions of varying compositions are widely known in inorganic chemistry (often referred to as "water glass") and are used in numerous sectors, for example in agriculture, construction, in the ceramics industry and as an ennobling agent and adhesive in paper. These solutions are widely available commercially; in Italy, for example, they are sold by the company Ingessil s.r.l. of Montorio (VE), in a line of products called Nacoren, which differ from each other in the molar ratio between $SiO_2$ and $Na_2O$ and in the concentration of the

inorganic components in water, leading to densities varying between approximately 1.25 and 1.56 g/ml. All these solutions are suitable for the purposes of the present invention: solutions with a higher concentration of inorganics are preferred for productivity reasons.

For dripping the aqueous sodium silicate solution into the sol, it is preferable to use a silicone dripper, which prevents the viscous liquid from sticking. The drip head can be made in many ways, for example it can be a silicone tube wound in a spiral on a support and perforated along its entire length, or sections of silicone tube of equal size, also perforated, arranged in a radial pattern around a central support. The sodium silicate solution is forced out of the holes in the silicone tubes by overpressure, achieved by means of a pump.

The sodium silicate solution in contact with the sol immediately coagulates into small spheres (spherules), due to the combined action of the pH difference (sodium silicate solutions have a pH ranging between 10 and 12.5, whereas the sol is acidic) and the presence of alcohol in the sol, in which sodium silicate is insoluble. The spherules have variable dimensions, which can be controlled by adjusting the size of the holes in the silicone tubes and the pressure exerted on the liquid by the pump. Typically, the spherules have a diameter between 0.5 and 5 mm, most commonly between 1 and 3 mm. In some cases, the drops of sodium silicate solution, due to the impact with the sol during dripping, break up to form spherules of about 0.1 mm in size; these are normally removed with the sol in filtration step d).

The spherules have a higher density than the sol and therefore settle on the bottom of the reactor by gravity; to prevent them from compacting, the sol is kept under gentle stirring, for example by a mechanical stirrer or magnetic anchor. In order not to impair the spherule formation process, the stirrer should rotate at a moderate speed of between 30 and 80 rpm, preferably around 60 rpm.

In step d) of the process, the spherules are separated from the sol by filtration. For this purpose, the portion of the sol volume containing the spherules is transferred to a second container which has a filter at its lower surface. The filter retains the spherules but allows the sol to flow out. Sol leaving the second container is preferably sent to a recovery tank and from there recirculated to step a). To aid this step, a gas (preferably nitrogen) is preferably flowed into the second container to help transport the liquid phase.

In this step, the sol is almost completely separated from the spherules, except for a very small amount that remains in the form of a thin film that wets the surface of the spherules.

Finally, in the last step of the process e), the sodium silicate spherules with a thin layer of sol on their surface are transferred to a closed mould in the shape of the desired final manufactured article. The mould can be filled in various ways, e.g., by gravity or injection, depending on the type of mould. The mould normally consists of two halves, a lower part which forms the initial container into which the spherules are transferred, and a counter-mould which is held in the desired position against the spherules by a press, forming the complete mould. The two parts of the mould are preferably covered with paper, which serves to keep the product compact and, once the process is over, will be useful to protect the inside of the manufactured article, comprised of the dried spherules.

The closed mould is then heated to a temperature between 180 and 320 °C; the duration of the heat treatment is typically between 2 and 15 minutes and is shorter the higher the temperature and the lower the thickness of the volume defined by the mould.

The heat treatment causes the spherules to expand due to the development of gas (air and water vapour) contained in the starting material; the expansion of the spherules causes them to compact and leads to the formation of a manufactured article that occupies the entire space inside the mould; during this operation the compression of the press is maintained.

After the heat treatment, the mould is opened, recovering the finished manufactured article.

Fig. 1 schematically shows an example of a possible plant for implementing steps c) to e) of the process.

The plant, 10, consists of the reactor 11, in which the sol prepared in steps a) and b) is produced or transferred. In an upper wall of the reactor 11 there is a dripper 12, through which the sodium silicate solution is dripped into the sol. A stirrer, 13, is immersed in the sol to keep the formed spherules (shown in the figure as element 14) in motion and prevent them from packing and compacting on the bottom of the reactor.

The bottom of the reactor 11 is connected to a discharge line on which there is a shutoff valve 15, which is kept closed during the performance of step c), and is opened for the performance of step d). By opening the valve 15, the part of the volume of sol in which the spherules are present is passed into the second container 16; at the bottom of the second container there is a filter, 17, which allows the outflow of sol but retains the spherules (the spherules in the second container are identified as element 14'). On the discharge line from the second container, downstream filter 17, there is a diverter valve 18 which, during the discharge of sol from the second container, directs it towards the recovery tank 19, from which the sol is then recirculated to the reactor 11 by means of a pump. The emptying of the container 16 from the sol is facilitated by having nitrogen flow into the container from the dedicated inlet duct (indicated in the figure by the wording "$N_2$ in"); the slight overpressure created by the influx of nitrogen is discharged when the spherules are dropped into the mould 20; for greater safety, it is also possible to provide for the presence of a vent valve (not indicated in the figure) at the top of container 16.

Once the emptying of the container 16 is complete, the filter 17 is removed and the valve 18 is moved to a position such to cause the falling of the spherules

into the lower part of the mould, 20.

The picture does not show the counter-mould and press used during the heat treatment of expansion and compaction of the spherules.

In a second aspect, the invention relates to a manufactured article obtained by the process described above.

A manufactured article of the invention has a similar appearance to polystyrene, is white, light (density values between 0.21 and 0.22 g/cm$^3$) and has a thermal insulation coefficient of about 0.030 W/mK, essentially equal to that of expanded polystyrene; unlike the latter material, however, the products of the invention have better mechanical stability with increasing temperature (expanded polystyrene has a softening T in the range between 70 and 100 °C), they are not flammable and, above all, they dissolve completely when immersed in water for a long time without giving rise to environmental pollution problems.

The invention will be further illustrated by the following examples.

## EXAMPLE 1

This example refers to the production of an article of the invention in the form of a disc having a diameter of 50 mm and a thickness of 10 mm.

90 kg MTES, 90 kg TEOS, 60 l distilled water and 1 L of a 1 N HCl or $HNO_3$ solution were introduced into a container. The resulting mixture was left to react under stirring at room temperature (approximately 21 °C) for 12 hours. In this period, the silane components are hydrolysed, resulting in a sol.

The sol was transferred to a reactor equipped with a magnetic anchor stirrer.

A sodium silicate solution having concentration 36% by weight, in which the sodium silicate had formula $(SiO_2)_x \cdot (Na_2O)_y$ with x/y = 3.4, was slowly dripped into the sol.

The dripping was achieved by pumping the sodium silicate solution, at a pressure of 1.55 bar, into a perforated silicone tube (2 mm diameter holes) placed at the top of the reactor approximately 10 cm from the free surface of the sol, so as to avoid as far as possible the formation of small spherules caused by the "bouncing" of the sodium silicate solution upon contact with the sol; the silicone tube was wound in a spiral around a support. The sol was kept stirred by means of a magnetic anchor rotating at 60 rpm. On contact with the sol, the drops of sodium silicate solution formed liquid spherules immiscible in and dispersed in the sol, having a diameter between 1 and 3 mm, which were deposited on the bottom of the reactor.

The spherules were discharged from the bottom of the reactor into a tank below, where excess sol was removed from the surface of the spherules by a flow of nitrogen at a pressure of 0.2 bar.

The spherules thus obtained were then discharged, through the opening of a discharge valve at the bottom of the tank, into the lower part of a cylindrical mould with a thickness of 10 mm and a diameter of 50 mm; when the level of the spherules reached the edge of the lower part of the mould, this was closed with a counter-mould and the complete mould was placed in a ventilated oven at a temperature of 250 °C for a period of 5 minutes.

After heat treatment, the manufactured article was extracted from the mould, thus obtaining the finished product (Sample 1). The weight of the manufactured product was measured and found to be 4.28 g, with a bulk density of 0.218 g/cm$^3$.

## EXAMPLE 2

In the test of this example, the thermal conductivity of Sample 1 produced in Example 1 was measured.

The measurement of thermal conductivity was carried out following the procedure of standard UNI EN 12667:2001.

Briefly, in this procedure the sample is placed between a heating element and a cooling element; the heating element consists of a central measuring element and a guard ring maintained at the same temperature as the central element, so that a one-dimensional heat flow is generated through the test sample.

The thermal conductivity is given by the following relationship:

$$\lambda = P \times s / A(T_c - T_f)$$

wherein:

P = electrical power dissipated by the central element (W);
s = thickness of the test sample (m);
A = area of the central element (m$^2$);
($T_c$ - $T_f$) = temperature difference (K) between the hot surface and the cold surface of the test sample.

A LASERCOMP FOX 300 instrument (TA Instruments®) was used for the test. The test was conducted under the following laboratory conditions: temperature 22 ± 3 °C, relative humidity 50 ± 10%.

The measured thermal conductivity value was 0.031 W/mK.

## EXAMPLE 3

The preparation of Example 1 was repeated under identical conditions, but with three different compositions of the alkyl-trialkoxysilane/tetraalkoxysilane component used to make the sol.

In the three cases, the amounts of MTES and TEOS were as follows:

| Sample | MTES (kg) | TEOS (kg) |
|---|---|---|
| 2 | 170 | 10 |
| 3 | 10 | 170 |
| 4 | 180 | / |

The bulk density was measured on Samples 2-4 and was similar to that measured on Sample 1.

## Claims

**1.** Process for manufacturing an article formed by expanded sodium silicate spherules, comprising the following steps:

a) preparing a mixture comprising 15 to 70% by weight of a first component consisting of an acidic aqueous solution having a pH value between 1.0 and 2.6, and 30 to 85% by weight of a second component selected from an alkyl-trialkoxysilane and a mixture of an alkyl-trialkoxysilane and a tetraalkoxysilane;
b) allowing the mixture to react for at least 8 hours at a temperature between 18 and 35 °C, obtaining a sol;
c) dripping into the sol, maintained under gentle stirring, a solution of sodium silicate having formula $(SiO_2)_x \cdot (Na_2O)_y$ wherein the ratio x/y may vary between 1.65 and 3.9, obtaining sodium silicate spherules at the bottom of the sol container;
d) removing the sol by filtration, recovering the sodium silicate spherules having the surface covered with a thin layer of sol;
e) transferring the sodium silicate spherules with a thin layer of sol on their surface into a closed mould having the shape of the desired final article and bringing them into the mould at a temperature between 180 and 320 °C.

**2.** Process according to claim 1, wherein an acid selected from hydrochloric acid and nitric acid is used to prepare the mixture of step a).

**3.** Process according to any one of the preceding claims, wherein the alkyl-trialkoxysilane used in step a) has general formula (I):

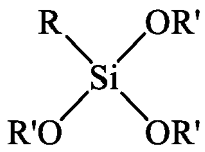

(I)

wherein R and R', equal or different from each other, are C1-C4 alkyl radicals.

**4.** Process according to claim 3, wherein said alkyl-trialkoxysilane is methyl-triethoxysilane.

**5.** Process according to any one of the preceding claims, wherein the tetraalkoxysilane optionally employed in step a) has general formula (II):

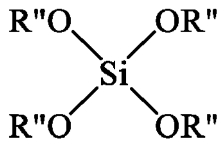

(II)

wherein the R" groups are C1-C4 alkyl radicals.

**6.** Process according to claim 5, wherein said tetraalkoxysilane is tetraethoxysilane.

**7.** Process according to any one of the preceding claims, wherein when a mixture between an alkyl-trialkoxysilane and a tetraalkoxysilane is used in step a), their weight ratio is between 17:1 and 1:17.

**8.** Process according to any one of the preceding claims, wherein the sodium silicate spherules obtained in step c) have a diameter between 0.5 and 5 mm.

**9.** Process according to claim 8, wherein said spherules have a diameter between 1 and 3 mm.

**10.** Process according to any one of the preceding claims, wherein gentle stirring of the sol of step c) is achieved by a mechanical or magnetic stirrer, which rotates at a speed of between 30 and 80 rpm.

**11.** Manufactured article obtained according to the process of any one of claims 1 to 10, having a density between 0.21 and 0.22 $g/cm^3$.

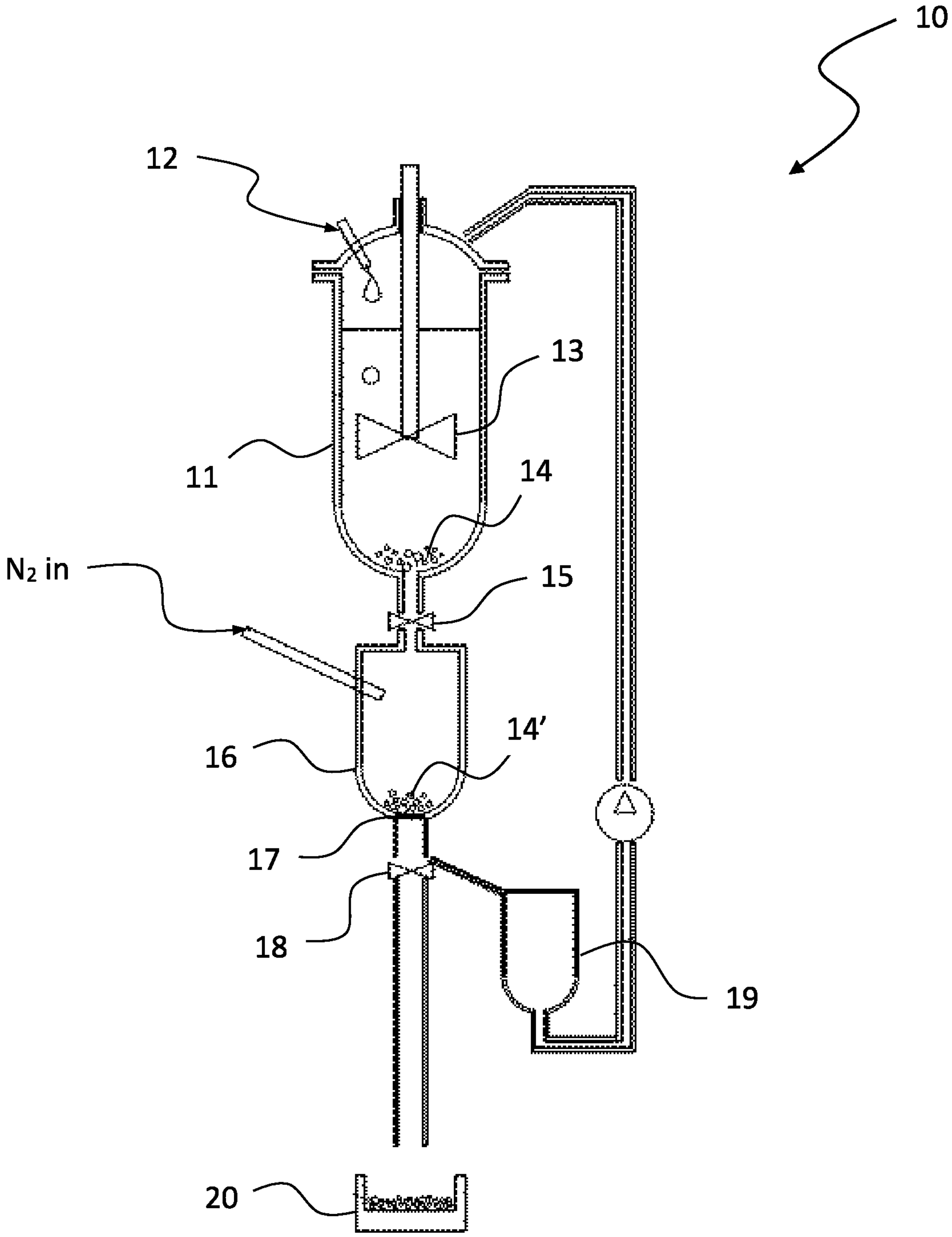


*Fig. 1*

Europäisches Patentamt
European Patent Office
Office européen des brevets

# EUROPEAN SEARCH REPORT

Application Number
EP 21 18 5544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 839 226 A (YATES P) 1 October 1974 (1974-10-01) * claims 1, 2, 7, 8 * * column 2, line 6 - line 18 * * column 6, line 6 - line 60 * * column 7, line 17 - line 60 * * column 8, line 9 - line 20 * * example 1 * ----- | 1-11 | INV. C01B33/32 B65D81/38 E04B1/76 C04B28/26 |
| A | JP S49 107008 A (SHIKOKU KASEI KOGYO KK) 11 October 1974 (1974-10-11) * the whole document * ----- | 1-11 | |
| A | US 4 824 807 A (BLOUNT DAVID H [US]) 25 April 1989 (1989-04-25) * claims 1, 7 * * example 1 * * column 4, line 18 - line 53 * ----- | 1-11 | |
| A | DATABASE WPI Week 197507 1975 Thomson Scientific, London, GB; AN 1975-11584W XP002805026, & JP S49 69755 A (TOYOTA CENT RES & DEV LA) 5 July 1974 (1974-07-05) * abstract * ----- | 11 | TECHNICAL FIELDS SEARCHED (IPC) E04B C01B B65D C04B B01J |

1 The present search report has been drawn up for all claims

| Place of search | Date of completion of the search | Examiner |
|---|---|---|
| The Hague | 13 December 2021 | Rigondaud, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 18 5544

This annex lists the patent family members relating to the patent documents cited in the above-mentioned European search report. The members are as contained in the European Patent Office EDP file on
The European Patent Office is in no way liable for these particulars which are merely given for the purpose of information.

13-12-2021

| Patent document cited in search report | | Publication date | Patent family member(s) | | Publication date |
|---|---|---|---|---|---|
| US 3839226 | A | 01-10-1974 | CA | 1023918 A | 10-01-1978 |
| | | | US | 3839226 A | 01-10-1974 |
| JP S49107008 | A | 11-10-1974 | NONE | | |
| US 4824807 | A | 25-04-1989 | NONE | | |
| JP S4969755 | A | 05-07-1974 | NONE | | |

EPO FORM P0459

For more details about this annex : see Official Journal of the European Patent Office, No. 12/82